# EUROPÄISCHE PATENTSCHRIFT

(11) **EP 2 683 559 B1**
(45) Veröffentlichungstag und Bekanntmachung des Hinweises auf die Patenterteilung: **02.11.2016**
(21) Anmeldenummer: 12700171.7
(22) Anmeldetag: 10.01.2012
(51) Int. Cl.: B60C 9/20

(54) **FAHRZEUGLUFTREIFEN**
VEHICLE PNEUMATIC TIRES
PNEUMATIQUES POUR VÉHICULE

(30) Priorität: 11.03.2011 DE 102011001228
(43) Veröffentlichungstag der Anmeldung: 15.01.2014
(73) Patentinhaber: Continental Reifen Deutschland GmbH, 30165 Hannover (DE)
(72) Erfinder: BECKER, Theresia, 40625 Hannover (DE)
(74) Vertreter: Finger, Karsten
(86) Internationale Anmeldenummer: PCT/EP2012/050274
(87) Internationale Veröffentlichungsnummer: WO 2012/123132

(56) Entgegenhaltungen:
- US-A1- 2002 033 213
- US-A1- 2010 294 413
- US-B1- 6 401 778

## Beschreibung

Die Erfindung betrifft einen Fahrzeugluftreifen - insbesondere für Nutzfahrzeuge - mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens drei von radial innen nach radial außen auf einander liegend angeordneten Gürtellagen ausgebildet ist, wobei die radial innere und die radial äußere Gürtellage Arbeitslagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°≤α≤45°und die Festigkeitsträger der radial äußeren Arbeitslage einen Winkel γ zur Umfangsrichtung U mit 10°≤γ≤45°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage und die Festigkeitsträger der beiden Arbeitslagen jeweils bei 10% der Bruchkraft eine Dehnung D von 0,22% ≤ D ≤ 0,4% aufweisen, und wobei die zwischen diesen beiden Arbeitslagen angeordnete Gürtellage eine als Nullgradlage ausgebildete Gürtellage mit in Gummi eingebetteten parallelen Festigkeitsträgern ist, die in ihrer Ausrichtung einen Winkel β mit 0°≤β≤5° zur Umfangsrichtung U einschließen.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen eine beschränkte Umfangssteifigkeit auf. Die hierdurch ermöglichte Beweglichkeit der Gürtelränder kann sich negativ auf die Haltbarkeit des Reifens auswirken. Der Gürtel kann darüber hinaus im Betrieb radialen Expansionen unterliegen. Dieses Wachstum kann zu überhöhtem ungleichmäßigem Abrieb des Reifens führen.

Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte 0°-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Der Einfluss der 0°-Lage beschränkt sich jedoch im Wesentlichen auf die radial äußere Arbeitslage. Die innere Arbeitslage ist jedoch mit einer verbleibenden Beweglichkeit ausgebildet, mit weiterhin negativen Einflüssen auf Haltbarkeit und Abrieb.

Darüber hinaus ist gelegentlich eine Ausbildung eines Nutzfahrzeugluftreifens mit einer Gürtelanordnung vorgeschlagen worden, bei der eine 0°-Lage radial zwischen den beiden Arbeitslagen ausgebildet ist. Die beiden Arbeitslagen sind bei diesen vorgeschlagenen Ausbildungen weiterhin im Kreuzverband ausgebildet und ihre Stahlkorde sind mit Winkeln von jeweils ca. 18° zur Umfangsrichtung ausgerichtet. Diese Ausbildung ermöglicht zwar eine hohe Umfangssteifigkeit und gegenüber einem herkömmlichen Nutzfahrzeugluftreifen eine verbesserte Haltbarkeit und ein verbessertes Abriebsbild. Die Stahlkorde dieser bekannten Arbeitslagen sind üblicherweise Stahlkorde des Typs 3x0,20+6x0,35NT. Damit diese Stahlkorde, welche eine Bruchkraft F von 1700N und eine Dehnung bei 10% der Bruchkraft von kleiner als 0,15% aufweisen, eine ausreichende Durchstoßfestigkeit der erhalten, sind eine Vielzahl von im Querschnitt relativ dünnen Stahlkorden in hoher Anordnungsdichte in den Arbeitslagen ausgebildet. Stahlkorde großer Querschnittsdicke, die die Gürtelhaltbarkeit begünstigen würden, sind hierdurch nur begrenzt einsetzbar. Selbst wenn Sie eingesetzt würden, bewirken die zur Begrenzung der Durchstoßgefahr erforderliche hohe Anordnungsdichte hohes Gürtellagengewicht, große Materialmengen und negativen Einfluss auf den Abrieb.

Aus der US5,772,810A ist ein Nutzfahrzeugluftreifen mit einem Gürtellagenkonzept mit einer zwischen zwei Arbeitslagen mit derartigen undehnbaren Festigkeitsträgern ausgebildeter Nullgradlage. In der US5,772,810A wird vorgeschlagen zur Behebung der diesen Gürtellagenkonzepten mit undehnbaren Festigkeitsträgern anhaftenden Problemen der durch Gürtelkantenbewegung der undehnbaren Festigkeitsträger eingeschränkten Gürtelhaltbarkeit die Arbeitslagen außerhalb der Nullgradlage zu koppeln.

Aus der US 6,401,778 B1 ist ein Fahrzeugluftreifen gemäß den Merkmalen des Oberbegriffs des Patentanspruchs 1 bekannt.

Aus der deutschen Patentanmeldung DE102010016569.7 ist ein Nutzfahrzeugluftreifen mit einer Gürtelanordnung mit einem anderen Gürtelkonzept mit einer radial zwischen den beiden Arbeitslagen ausgebildeten Nullgradlage bekannt. Die beiden Arbeitslagen sind weiterhin im Kreuzverband ausgebildet. Die Festigkeitsträger der beiden Arbeitslagen sind dehnbar mit einer Dehnung D von 0,22%≤ D ≤ 0,4% bei 10% der Bruchkraft. Der aus dieser Anmeldung bekannte Nutzfahrzeugluftreifen ermöglicht unter Nutzung der Vorteile der Anordnung der Nullgradlage zwischen den Arbeitslagen gegenüber den zuvor bekannten Nutzfahrzeugluftreifen mit Gürtel, deren Festigkeitsträger der Arbeitslagen mit undehnbaren Festigkeitsträgern ausgebildet sind, durch diese Ausbildung mit dehnbaren Festigkeitsträgern eine deutlich verbesserte Gürtelhaltbarkeit.

Der Erfindung liegt nun die Aufgabe zugrunde, bei einem Fahrzeugluftreifen gemäß dem Oberbegriff des Anspruchs 1 den Rollwiderstand weiter zu reduzieren.

Die Aufgabe wird erfindungsgemäß durch die Ausbildung eines Fahrzeugluftreifens - insbesondere für Nutzfahrzeuge - mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens drei von radial innen nach radial außen auf einander liegend angeordneten Gürtellagen ausgebildet ist, wobei die radial innere und die radial äußere Gürtellage Arbeitslagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°≤α≤45°und die Festigkeitsträger der radial äußeren Arbeitslage einen Winkel γ zur Umfangsrichtung U mit 10°≤γ≤45°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage und die Festigkeitsträger einer - insbesondere beider - der beiden Arbeitslagen jeweils bei 10% der Bruchkraft eine Dehnung D von 0,22% ≤ D ≤ 0,4% aufweisen, und wobei die zwischen diesen beiden Arbeitslagen angeordnete Gürtellage eine als Nullgradlage ausgebildete Gürtellage mit in Gummi eingebetteten parallelen Festigkeitsträgern ist, die in ihrer Ausrichtung einen Winkel β mit 0°≤β≤5° zur Umfangsrichtung U einschließen, gemäß den Merkmalen von Anspruch 1 gelöst, bei dem beide Arbeitslagen breiter ausgebildet sind als die als Nullgradlage ausgebildete Gürtellage und in axialer Richtung A des Fahrzeugluftreifens zu beiden Seiten außerhalb der als Nullgradlage ausgebildeten Gürtellage längs eines Erstreckungsabschnitts der Länge p mit p > 0mm, in welchem der in radialer Richtung R gemessene Abstand s der Festigkeitsträger der einen Arbeitslage zu den Festigkeitsträgern der anderen Arbeitslage mit s ≤1,5mm ausgebildet ist, unter Berührung gekoppelt sind.

Durch diese Ausbildung wird eine enge Kopplung der beiden Arbeitslagen innerhalb des Gürtels im axialen Erstreckungsbereich außerhalb der zwischen den Arbeitslagen eingeschlossenen Nullgradlage über einen Erstreckungsbereich p gewährleistet. Durch die Ausbildung mit Arbeitslagen mit dehnbarer Festigkeitsträgern und der dazwischen ausgebildeten Nullgradlage wird eine hohe Gürtelhaltbarkeit erzielt. Die zusätzliche Kopplung der Arbeitslagen außerhalb der Nullgradlage reduziert die auftretenden Spannungen im Bereich der Kordenden des Gürtels und deren Beweglichkeit in diesem Gürtel, wodurch der Rollwiderstand reduziert wird. Hierdurch können die Vorteile der Ausbildung des zwischen den beiden Arbeitslagen ausgebildeten 0°-Lage bei hoher Gürtelhaltbarkeit und geringem Rollwiderstand ermöglicht werden.

Besonders vorteilhaft ist die Ausbildung eines Fahrzeugluftreifens gemäß den Merkmalen von Anspruch 2, wobei die Erstreckungslänge p der Kopplung mit 5mm ≤ p ≤ 15mm ausgebildet ist. Hierdurch kann die Bewegung zwischen den Arbeitslagen bei sicherer Kopplung zuverlässig reduziert und der Rollwiderstand verbessert werden.

Besonders vorteilhaft ist die Ausbildung eines Fahrzeugluftreifens gemäß den Merkmalen von Anspruch 3, wobei beide Arbeitslagen sich ausgehend vom Erstreckungsabschnitt der Länge p der Kopplung in axialer, von der Gürtellage wegweisender Richtung ohne Berührkontakt zueinander über einen Erstreckungsabschnitt der Länge t mit 5mm≤ t ≤10mm erstrecken, und eine der beiden Arbeitslagen dort endet, wobei im Erstreckungsabschnitt der Länge t der in radialer Richtung R gemessene Abstand s₁ der Festigkeitsträger der einen Arbeitslage zu den Festigkeitsträgern der anderen Arbeitslage - insbesondere unter stetiger Zunahme längs der Erstreckung bis zum Rand der einen Arbeitslage - mit s₁ >1,5mg - insbesondere mit s₁ <5mm - ausgebildet ist. Hierdurch können Rollwiderstand und Haltbarkeit des Gürtels und somit des Reifens optimiert werden.

Besonders vorteilhaft ist die Ausbildung eines Fahrzeugluftreifens gemäß den Merkmalen von Anspruch 4, wobei die Festigkeitsträger mindestens einer der beiden - insbesondere beider - Arbeitslagen jeweils eine Bruchkraft F mit F> 1800N - insbesondere mit F> 2500N - aufweisen. Hierdurch wird eine optimale Durchstoßfestigkeit gegen Kordbrüche bei gutem Abriebverhalten und hoher Haltbarkeit ermöglicht.

Besonders vorteilhaft ist die Ausbildung eines Fahrzeugluftreifens gemäß den Merkmalen von Anspruch 5, wobei die Festigkeitsträger mindestens einer der beiden - insbesondere beider - Arbeitslagen jeweils bei 10% der Bruchkraft eine Dehnung D von 0,28% ≤ D ≤ 0,32% aufweisen. Die Dehnung ermöglicht noch die Bewegung kleinerer Steinchen bei ausreichend hoher Schersteifigkeit für ein optimiertes Abriebverhalten.

Besonders vorteilhaft ist die Ausbildung eines Fahrzeugluftreifens gemäß den Merkmalen von Anspruch 6, wobei radial außerhalb der radial äußeren Arbeitslage auf der äußeren Arbeitslage eine weitere Gürtellage mit parallelen in Gummi eingebetteten Festigkeitsträgern ausgebildet ist, da durch die zusätzliche äußere Gürtellage der Schutz gegen Durchstoßen weiter erhöht werden kann.

Besonders vorteilhaft ist die Ausbildung eines Fahrzeugluftreifens gemäß den Merkmalen von Anspruch 7, wobei die weitere Gürtellage als Nullgradlage ausgebildet ist, deren Festigkeitsträger in ihrer Ausrichtung einen Winkel δ zur Umfangsrichtung U des Fahrzeugluftreifens mit 0°≤δ≤5°einschließen, da hierdurch die Umfangskräfte maßgeblich auf zwei Gürtellagen verteilt werden. Hierdurch kann auch bei eventuell im Einsatz des Reifens auftretenden zu hohen Belastungen Kordbrüchen zusätzlich entgegengewirkt werden.

Besonders vorteilhaft ist die Ausbildung eines Fahrzeugluftreifens gemäß den Merkmalen von Anspruch 8, wobei die Festigkeitsträger der **weiteren** Gürtellage in ihrer Ausrichtung einen Winkel δ zur Umfangsrichtung U des Fahrzeugluftreifens mit 10°≤δ≤90° - insbesondere mit 15°≤δ≤45°- einschließen. Die hierdurch erzielte Schersteifigkeit wirkt sich positiv auf die Erzielung eines gleichmäßigen Abriebsbildes aus bei zusätzlichem Schutz gegen das Eindringen von Steinen.

Besonders vorteilhaft ist die Ausbildung eines Fahrzeugluftreifens gemäß den Merkmalen von Anspruch 9, wobei radial innerhalb der radial inneren Arbeitslage zwischen der Karkasse und der radial inneren Arbeitslage eine **zusätzliche** Gürtellage mit parallelen in Gummi eingebetteten Festigkeitsträgern ausgebildet ist, deren Festigkeitsträger in ihrer Ausrichtung einen Winkel ε zur Umfangsrichtung U des Fahrzeugluftreifens - insbesondere mit 45°≤ε≤90° - einschließen, weil die zusätzliche gebildete Sperrlage einen optimalen Kraftfluss von der Karkasse in den aus den Gürtellagen gebildeten Gürtel bietet und außerdem die Bewegung der Arbeitslagen reduziert und daher die Haltbarkeit weiter verbessert.

Besonders vorteilhaft ist die Ausbildung eines Fahrzeugluftreifens gemäß den Merkmalen von Anspruch 10, wobei die radial äußere der beiden Arbeitslagen in ihrer axialen Erstreckung im Fahrzeugluftreifen kleiner ausgebildet ist als die radial innere der beiden Arbeitslagen, wobei insbesondere die radial äußere der beiden Arbeitslagen zu beiden axialen Seiten hin innerhalb des axialen Erstreckungsbereiches der radial inneren der beiden Arbeitslagen endet. Hierdurch kann vermieden werden, dass die äußere Arbeitslage im Bereich der Schultern einer hohen Bewegung ausgesetzt wird. Die Haltbarkeit kann somit weiter verbessert werden.

Besonders vorteilhaft ist die Ausbildung eines Fahrzeugluftreifens gemäß den Merkmalen von Anspruch 11, wobei die Festigkeitsträger der Nullgradlage(n) Festigkeitsträger aus Stahl sind. Hierdurch wird eine hohe Umfangssteifigkeit und eine gute Haltbarkeit und gleichmäßiger Abrieb weiter begünstigt.

Besonders vorteilhaft ist die Ausbildung eines Fahrzeugluftreifens gemäß den Merkmalen von Anspruch 12, wobei die Festigkeitsträger wenigstens der zwischen den Arbeitslagen angeordneten Nullgradlage High-Elongation-Korde sind. Hierdurch kann in einfacher Weise die Erhebung des Gürtels im Aufbauprozess ermöglicht werden

Besonders vorteilhaft ist die Ausbildung eines Fahrzeugluftreifens gemäß den Merkmalen von Anspruch 13, wobei die Festigkeitsträger der zusätzlichen Gürtellage Festigkeitsträger aus Stahl sind, da hierdurch in einfacher Weise guter Schutz gegen Durchstoßen begünstigt wird.

Die Erfindung wird im Folgenden an Hand der in den Fig.1 bis Fig.7 schematisch dargestellten Ausführungsbeispiele eines Nutzfahrzeugluftreifens radialer Bauart erläutert. Darin zeigen
- Fig.1: die Querschnittsdarstellung eines Fahrzeugluftreifens für Nutzfahrzeuge radialer Bauart,
- Fig.2: eine Draufsicht auf den Gürtel von Fig. 1 gemäß Schnitt II - II von Fig.1, bei der zur Vereinfachung alle anderen Bauteile des Reifens nicht dargestellt sind,
- Fig.3: eine ausschnittsweise Querschnittsdarstellung eines Fahrzeugluftreifens analog zur Darstellung von Fig. mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind,
- Fig.5: eine ausschnittsweise Querschnittsdarstellung eines Fahrzeugluftreifens analog zur Darstellung von Fig. 1 mit weiterer alternativer Ausbildung des Gürtels,
- Fig.6: Draufsicht auf den Gürtel von Fig.5 gemäß Schnitt VI - VI von Fig.5, bei der zur Vereinfachung alle anderen Bauteile des Reifens nicht dargestellt sind und
- Fig.7: Querschnittsdarstellung eines Gürtelrandabschnitts des Fahrzeugluftreifens von Fig. 1 mit Detaildarstellung der Kopplung zur Erläuterung der erfindungsgemäßen Kopplungsausbildung der Arbeitslagen des Gürtels beispielhaft auch für alle anderen Ausführungen gemäß Fig.3 und Fig.5.

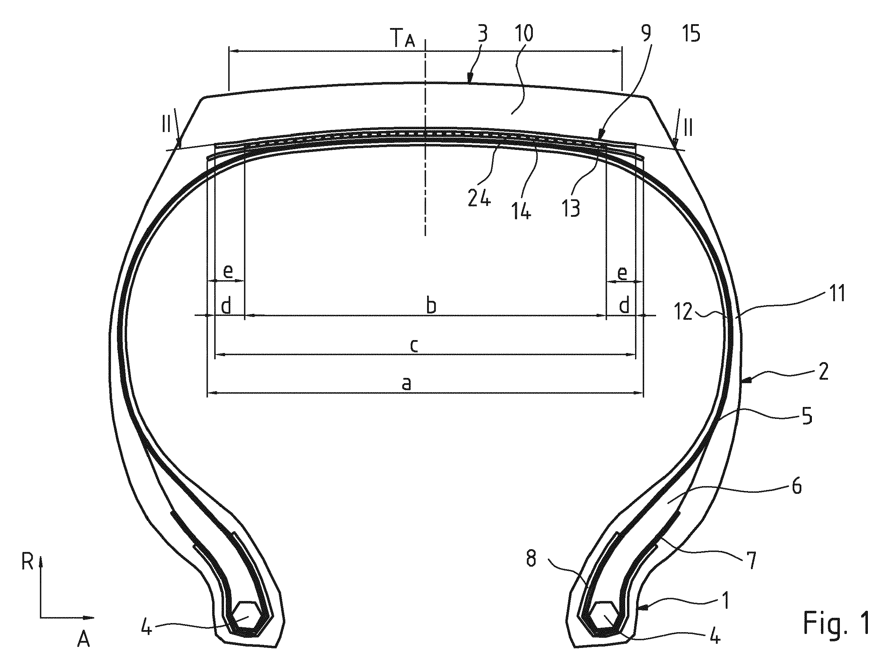

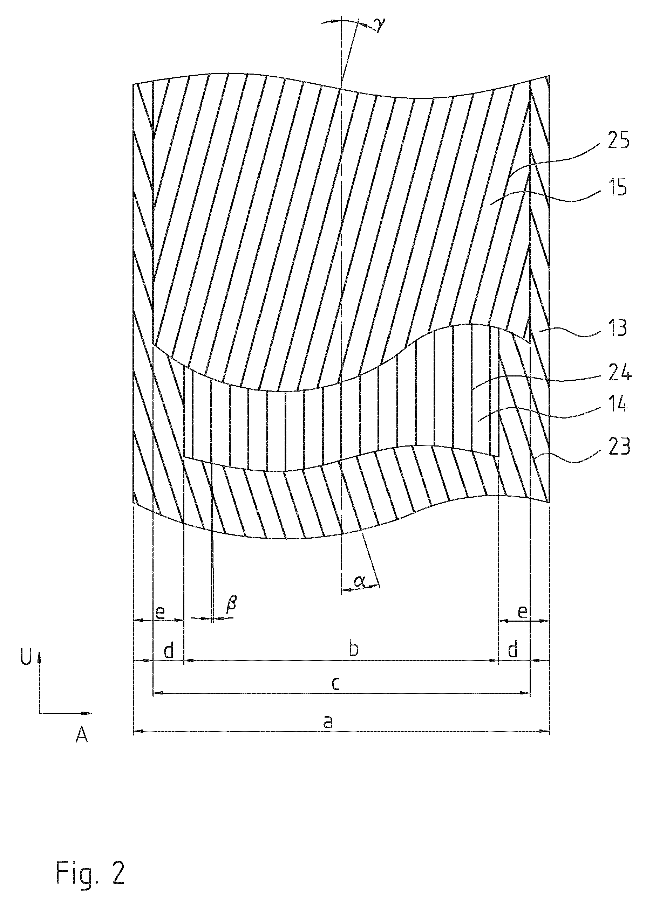

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus drei in radialer Richtung R übereinander und aufeinanderliegend angeordneten Gürtellagen 13, 14 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die radial innere Gürtellage 13 und die radial äußere Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet. Die zwischen den beiden Arbeitslagen 15 und 13 ausgebildete dritte Gürtellage 14 erstreckt sich in Umfangsrichtung U über den gesamten Umfang des Fahrzeugluftreifens und in axialer Richtung von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind. Alle drei Gürtellagen 13, 14 und 15 erstrecken sich zu beiden axialen Seiten jeweils bis in eine Position in der jeweiligen Reifenschulter, die axial außerhalb der Bodenaufstandsfläche - dargestellt durch die axiale Breite Tₐ der Bodenaufstandsfläche, liegt. Die Gürtellage 14 ist über ihre gesamte axiale Erstreckung in direktem Berührkontakt sowohl zu der unter ihr angeordneten Arbeitslage 13 als auch zu der über ihr angeordneten Arbeitslage 15.

Die 0°-Lage 14 erstreckt sich in axialer Richtung A über eine axiale Breite b, die untere Arbeitslage 13 erstreckt sich in axialer Richtung A über eine axiale Breite a und die obere Arbeitslage 15 erstreckt sich in axialer Richtung A über eine axiale Breite c im Reifen mit a > c > b. Dabei erstreckt sich zu beiden axialen Seiten der 0°-Lage 14 die innere Arbeitslage 13 um eine axiale Erstreckungslänge e über die axiale Position des jeweiligen Gürtelrandes der 0°-Lage 14 hinaus. Ebenso erstreckt sich die äußere Arbeitslage 15 in beide axiale Richtungen jeweils um eine axiale Erstreckungslänge d über die axiale Position des jeweiligen Gürtelrandes der 0°-Lage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet. Auch im Bereich des Überhangs berühren sich die beiden Arbeitslagen 13 und 15 nicht.

Die Festigkeitsträger 23 und 25 der beiden Arbeitslagen 13 und 15 sind Stahlkorde bekannter Art, die bei Belastung auf Zug eine Bruchkraft F von F>2500N und bei 10% der Bruchkraft eine Dehnung D von 0,28% ≤ D ≤ 0,32% aufweisen. Derartige Stahlkorde sind beispielsweise Stahlkorde des Typs 3+8x0,35HT mit einer Bruchkraft F=3000N und mit einer Dehnung D von D=3,0% bei 10% der Bruchkraft. Die Werte sind mit der BISFA E6 Standard-Testmethode für Stahlkorde ermittelt.

Die Festigkeitsträger 24 sind in einer Ausführung Stahlkorde bekannter Art. In einer anderen Ausführung sind die Festigkeitsträger 24 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

In einem Ausführungsbeispiel ist β = 1°, α = 20°, γ = 20°, d = 11 mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

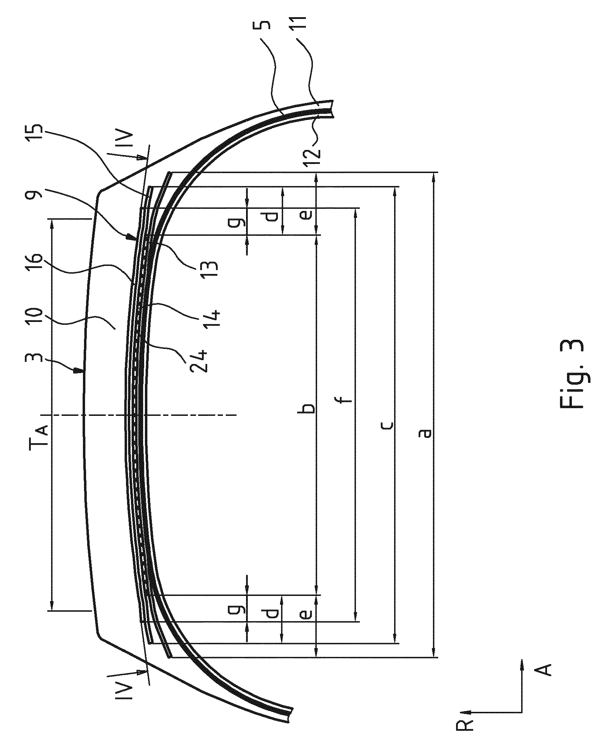

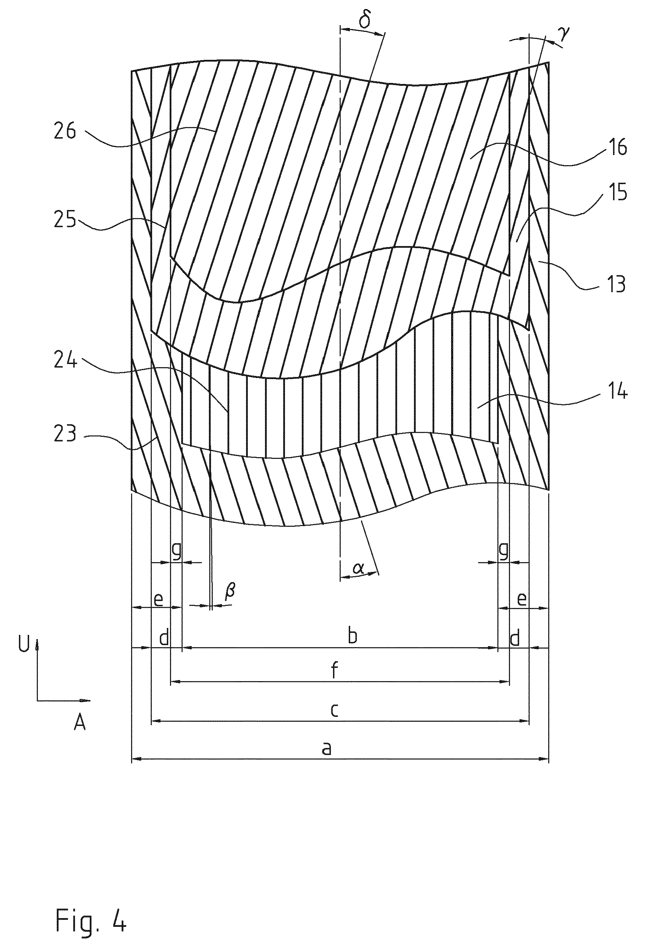

Fig.3 und Fig.4 zeigen eine weitere alternative Ausführung, bei der der Gürtel 9 zusätzlich zu den in den Fig.1 und Fig.2 dargestellten Gürtellagen 13, 14 und 15 auf der radialen Außenseite der äußeren Arbeitslage 15 mit einer zusätzlichen Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 15°≤δ≤45°. Die Gürtellage 16 erstreckt sich über ihre gesamte axiale Erstreckung in unmittelbarem Berührkontakt zur Arbeitslage 15 und endet in axialer Richtung A an ihren beiden Gürtellagenrändem jeweils in einer axialen Position zwischen dem nächstliegenden Gürtellagenrand der 0°-Lage 14 und dem nächstliegenden Gürtellagenrand der radial äußeren Arbeitslage 15 im axialen Abstand g vom Gürtellagenrand der 0°-Lage 14 mit g < d. Die Breite f ist das Maß der axialen Erstreckung der zusätzliche Gürtellage 16 mit b < f < c < a.

Die Festigkeitsträger 26 der Gürtellage 16 sind in einem Ausführungsbeispiel mit gleicher Neigungsrichtung ausgebildet wie die Festigkeitsträger 25 der Arbeitslage 15.

Die Festigkeitsträger 26 sind Stahlkorde bekannter Art.

In einer anderen nicht dargestellten Ausführung ist die zusätzliche Gürtellage 16 als 0°-Lage ausgebildet und der Neigungswinkel δ ihrer über den gesamten Umfang des Fahrzeugluftreifens erstreckten Festigkeitsträger 26 mit 0° ≤ δ ≤ 5°. Bei Ausbildung der zusätzlichen Arbeitslage 16 als 0°-Lage sind die Festigkeitsträger 26 in einer Ausführung Stahlkorde bekannter Art. In einer anderen Ausführung sind die Festigkeitsträger 26 der als 0°-Lage ausgebildeten Arbeitslage 16 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

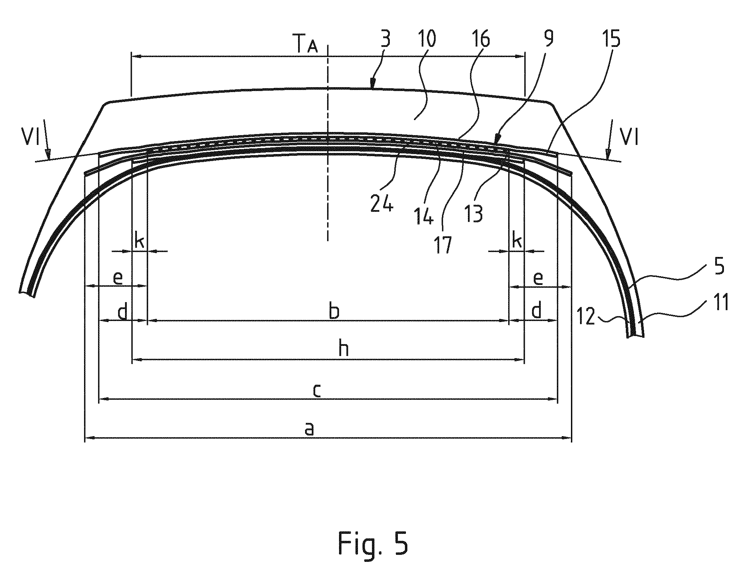

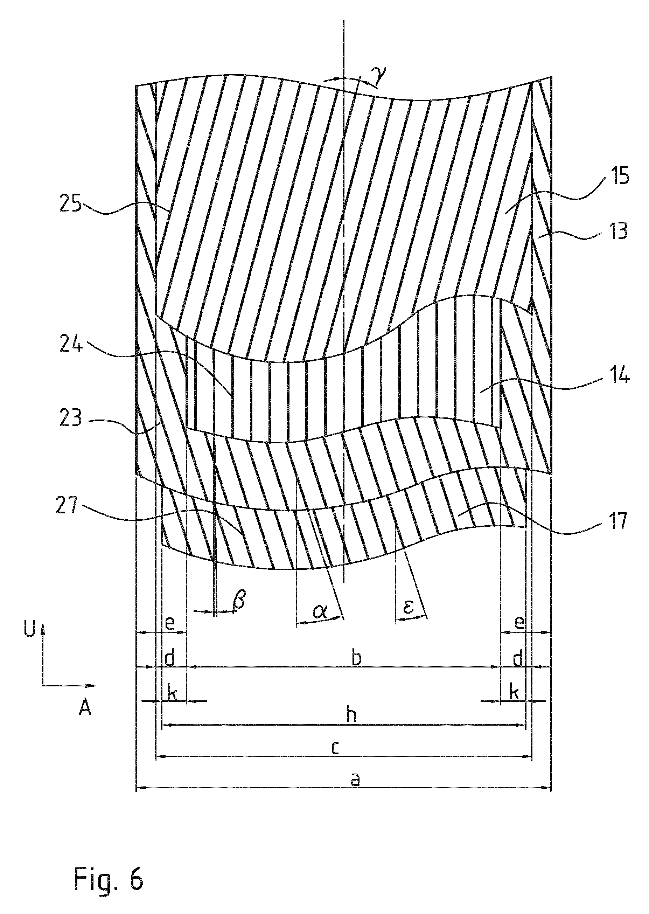

Fig.5 und Fig.6 zeigen ein weiteres alternatives Ausführungsbeispiel, bei dem anders als in bei den in Fig.1 und Fig.2 dargestellten und erläuterten Ausführungsbeispielen der Gürtel 9 zusätzlich mit einer in radialer Position zwischen radial innere Arbeitslage 13 und Karkasse 5 angeordneten Gürtellage 17 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 45° ≤ ε ≤ 90°, beispielsweise mit ε = 50°. Die Gürtellage 17 erstreckt sich über ihre gesamte axiale Erstreckung in unmittelbarem Berührkontakt zur Arbeitslage 13 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand k vom Gürtellagenrand der 0°-Lage 14 mit k < d < e. Die Breite h ist das Maß der axialen Erstreckung der zusätzliche Gürtellage 17 mit b < h < c < a.

Die Festigkeitsträger 27 der Gürtellage 17 sind in einem Ausführungsbeispiel mit gleicher Neigungsrichtung ausgebildet wie die Festigkeitsträger 23 der radial inneren Arbeitslage 13.

Die Festigkeitsträger 27 sind Stahlkorde bekannter Art.

In weiteren alternativen, nicht dargestellten Ausführungen ist bei den im Zusammenhang mit den Fig.3 und Fig.4 dargestellten Ausführungen mit zusätzlicher Gürtellage 16 auch die im Zusammenhang mit den Fig.5 und Fig.6 dargestellte zusätzliche innere Gürtellage 17 ausgebildet. In diesem Fall ist der Gürtel 9 aus einer 5-Lagenanordnung mit den von radial innen nach radial außen übereinander angeordneten Gürtellagen 17, 13, 14, 15 und 16 ausgebildet.

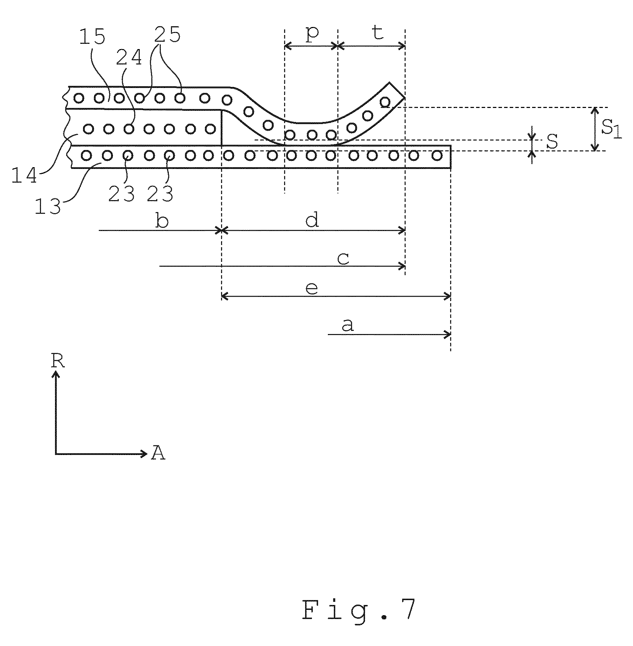

Fig.7 zeigt in vergrößerter Detaildarstellung die bei den in den Figuren 1 bis 6 dargestellten und oben beschriebenen Ausführungen jeweils ausgebildete Ausführung der erfindungsgemäßen Kopplung der Arbeitslagen 13 und 15 am Beispiel des in den Figuren 1 und 2 dargestellten Gürtels. Die Ausbildung der Kopplung ist bei den anderen dargestellten und/oder beschriebenen Ausführungen jeweils in analoger Weise ausgebildet.

Zur Vereinfachung zeigt Fig. 7 lediglich den rechten Gürtelrandbereich der Arbeitslagen 13 und 15 und der in radialer Richtung dazwischen ausgebildeten Nullgradlage 14. Wie Fig.7 entnommen werden kann, sind die schmalere Arbeitslage 15 und die breitere Arbeitslage 13 ausgehend vom axialen Rand der schmaler ausgebildeten Arbeitslage 15 in axialer Richtung A zur Nullgradlage 14 hin über einen ersten Erstreckungsabschnitt der Erstreckungslänge t mit 5mm ≤ t ≤ 10mm ohne Berührkontakt zu einander und in einem in axialer Richtung A zur Nullgradlage 14 hin an den ersten Erstreckungsabschnitt angrenzenden zweiten Erstreckungsabschnitt der Erstreckungslänge p mit 5mm≤p≤15mm längs der gesamten Erstreckung der Erstreckungslänge p in direktem Berührkontakt zueinander ausgebildet. In axialer Richtung A nach innen zur Nullgradlage 14 hin an den zweiten Erstreckungsbereich der Länge p anschließend sind die beiden Gürtellagen 13 und 15 ohne direkten Berührkontakt zueinander ausgebildet.

Die Erstreckungslängen p und t sind mit d ≥ (p + t) ≥ (0,9d) ausgebildet. Innerhalb des zweiten Erstreckungsbereiches der Länge p mit Berührkontaktes der beiden Arbeitslagen 15 und 13 zueinander ist der in radialer Richtung R des Fahrzeugluftreifens gemessene Abstand s zwischen den Festigkeitsträgern 23 der Arbeitslage 13 und den Festigkeitsträgern 25 der Arbeitslage 15 mit s ≤ 1,5 mm - beispielsweise mit s = 1mm - ausgebildet. Im ersten Erstreckungsbereich der Erstreckungslänge t, der zwischen dem Erstreckungsbereich der Länge p und dem Gürtellagenrand der schmaleren Arbeitslage 15 ausgebildet ist, ist der in radialer Richtung R gemessene Abstand s₁ zwischen den Festigkeitsträgern 23 der Gürtellage 13 und den Festigkeitsträgern 25 der Gürtellage 15 ausgehend von dem Wert der Größe s am Übergang zwischen zweitem Erstreckungsbereich zum ersten Erstreckungsbereich der Erstreckungslänge t längs des ersten Erstreckungsbereichs der Länge t bis zum Gürtellagenrand der Gürtellage 15 kontinuierlich zunehmend ausgebildet mit 5mm>s₁ > 1,5mm längs der gesamten Erstreckung der Erstreckungslänge t.

Zwischen dem zweiten axialen Erstreckungsabschnitt der Erstreckungslänge p und der Nullgradlage 14 nimmt der in radialer Richtung R gemessene Abstand zwischen den Festigkeitsträgern 23 der Arbeitslage 13 und den Festigkeitsträgern 25 der Arbeitslage 15 ebenfalls kontinuierlich zu.

### Bezugszeichenliste

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen - insbesondere für Nutzfahrzeuge - mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens drei von radial innen nach radial außen auf einander liegend angeordneten Gürtellagen (13,14,15) ausgebildet ist, wobei die radial innere (13) und die radial äußere (15) Gürtellage Arbeitslagen mit in Gummi eingebetteten parallelen Festigkeitsträgern (23,25) aus Stahl sind, wobei die Festigkeitsträger (23) der radial inneren Arbeitslage (13) in ihrer Ausrichtung einen Winkel α zur Umfangsrichtung U mit 10°≤α≤45°und die Festigkeitsträger (25) der radial äußeren Arbeitslage (15) einen Winkel γ zur Umfangsrichtung U mit 10°≤γ≤45°einschließen, wobei in Umfangsrichtung U des Fahrzeugreifens gesehen die Festigkeitsträger (23) der einen Arbeitslage (13) eine entgegengesetzte axiale Neigungsrichtung zu den Festigkeitsträgern (25) der anderen Arbeitslage (15),
wobei die zwischen diesen beiden Arbeitslagen (13,15) angeordnete Gürtellage (14) eine als Nullgradlage ausgebildete Gürtellage (14) mit in Gummi eingebetteten parallelen Festigkeitsträgern (24) ist, die in ihrer Ausrichtung einen Winkel β mit 0°≤β≤5° zur Umfangsrichtung U einschließen,
wobei beide Arbeitslagen (13,15) breiter ausgebildet sind als die als Nullgradlage ausgebildete Gürtellage (14) und in axialer Richtung A des Fahrzeugluftreifens zu beiden Seiten außerhalb der als Nullgradlage ausgebildeten Gürtellage (14) längs eines Erstreckungsabschnitts der Länge p mit p > 0mm, in welchem der in radialer Richtung R gemessene Abstand s der Festigkeitsträger (23) der einen Arbeitslage (13) zu den Festigkeitsträgern (25) der anderen Arbeitslage (15) mit s ≤1,5mm ausgebildet ist, unter Berührung gekoppelt sind,
**dadurch gekennzeichnet,**
**dass** die Festigkeitsträger (23,25) einer - insbesondere beider - der beiden Arbeitslagen (13,15) jeweils bei 10% der Bruchkraft eine Dehnung D von 0,22% ≤ D ≤ 0,4% aufweisen.

2. Fahrzeugluftreifen gemäß den Merkmalen von Anspruch 1,
wobei die Erstreckungslänge p der Kopplung mit 5mm ≤ p ≤ 15mm ausgebildet ist.

3. Fahrzeugluftreifen gemäß den Merkmalen von Anspruch 1 oder 2,
wobei beide Arbeitslagen (13,15) sich ausgehend vom Erstreckungsabschnitt der Länge p der Kopplung in axialer, von der Gürtellage (14) wegweisender Richtung ohne Berührkontakt zueinander über einen Erstreckungsabschnitt der Länge t mit 5mm≤ t ≤10mm erstrecken, und eine (15) der beiden Arbeitslagen dort endet, wobei im Erstreckungsabschnitt der Länge t der in radialer Richtung R gemessene Abstand s₁ der Festigkeitsträger (23) der einen Arbeitslage (13) zu den Festigkeitsträgern (25) der anderen Arbeitslage - insbesondere unter stetiger Zunahme längs der Erstreckung bis zum Rand der einen Arbeitslage (13) - mit s₁ >1,5mm - insbesondere mit s₁ <5mm - ausgebildet ist.

4. Fahrzeugluftreifen gemäß den Merkmalen von einem der vorangegangenen Ansprüche,
wobei die Festigkeitsträger (23,25) mindestens einer der beiden - insbesondere beider - Arbeitslagen (13,15) jeweils eine Bruchkraft F mit F>1800N - insbesondere mit F> 2500N - aufweisen.

5. Fahrzeugluftreifen gemäß den Merkmalen von einem der vorangegangenen Ansprüche,
wobei die Festigkeitsträger (23,25) mindestens einer der beiden - insbesondere beider - Arbeitslagen (13,15) jeweils bei 10% der Bruchkraft eine Dehnung D von 0,28% ≤ D ≤ 0,32% aufweisen.

6. Fahrzeugluftreifen gemäß den Merkmalen von einem der vorangegangenen Ansprüche,
wobei radial außerhalb der radial äußeren Arbeitslage (15) auf der äußeren Arbeitslage (15) eine weitere Gürtellage (16) mit parallelen in Gummi eingebetteten Festigkeitsträgern (26) ausgebildet ist.

7. Fahrzeugluftreifen gemäß den Merkmalen von Anspruch 6,
wobei die weitere Gürtellage (16) als Nullgradlage ausgebildet ist, deren Festigkeitsträger (26) in ihrer Ausrichtung einen Winkel δ zur Umfangsrichtung U des Fahrzeugluftreifens mit 0°≤ δ ≤5°einschließen.

8. Fahrzeugluftreifen gemäß den Merkmalen von Anspruch 6,
wobei die Festigkeitsträger (26) der **weiteren** Gürtellage (16) in ihrer Ausrichtung einen Winkel δ zur Umfangsrichtung U des Fahrzeugluftreifens mit 10°≤δ≤90° - insbesondere mit 15°≤δ≤45°- einschließen.

9. Fahrzeugluftreifen gemäß den Merkmalen von einem der vorangegangenen Ansprüche,
wobei radial innerhalb der radial inneren Arbeitslage (13) zwischen der Karkasse (5) und der radial inneren Arbeitslage (13) eine **zusätzliche** Gürtellage (17) mit parallelen in Gummi eingebetteten Festigkeitsträgern (27) ausgebildet ist, deren Festigkeitsträger (27) in ihrer Ausrichtung einen Winkel ε zur Umfangsrichtung U des Fahrzeugluftreifens - insbesondere mit 45°≤ε≤90° - einschließen.

10. Fahrzeugluftreifen gemäß den Merkmalen von einem der vorangegangenen Ansprüche,
wobei die radial äußere der beiden Arbeitslagen (15) in ihrer axialen Erstreckung c im Fahrzeugluftreifen kleiner ausgebildet ist als die radial innere der beiden Arbeitslagen (13),
wobei insbesondere die radial äußere (15) der beiden Arbeitslagen (13,15) zu beiden axialen Seiten hin innerhalb des axialen Erstreckungsbereiches der radial inneren (13) der beiden Arbeitslagen (13,15) endet.

11. Fahrzeugluftreifen gemäß den Merkmalen von einem oder mehreren der vorangegangenen Ansprüche,
wobei die Festigkeitsträger (24,26) der Nullgradlage(n) (14,16) Festigkeitsträger aus Stahl sind.

12. Fahrzeugluftreifen gemäß den Merkmalen von Anspruch einem oder mehreren der vorangegangenen Ansprüche,
wobei die Festigkeitsträger (24) wenigstens der zwischen den Arbeitslagen (13,15) angeordneten Nullgradlage (14) High-Elongation-Korde (HE) sind.

13. Fahrzeugluftreifen gemäß den Merkmalen von einem der Ansprüche 6 bis 9,
wobei die Festigkeitsträger (26,27) der zusätzlichen Gürtellage (16,17) Festigkeitsträger aus Stahl sind.

## Claims

1. Pneumatic vehicle tire, in particular for utility vehicles, having a carcass (5), having a belt (9) which is constructed radially outside the carcass (5) and having a profiled tread (10) which is constructed radially outside the belt (9) on the belt (9), wherein the belt (9) is formed from at least three belt plies (13, 14, 15) arranged lying one on top of the other from the radial inside to the radial outside, wherein the radially inner belt ply (13) and the radially outer belt ply (15) are working plies with parallel strength members (23, 25) made of steel, which are embedded in rubber, wherein the strength members (23) of the radially inner working ply (13) enclose in their orientation an angle α with respect to the circumferential direction U where 10° ≤ α ≤ 45° and the strength members (25) of the radially outer working ply (15) enclose an angle γ with respect to the circumferential direction U where 10° ≤ γ ≤ 45°, wherein, when viewed in the circumferential direction U of the vehicle tire, the strength members (23) of the one working ply (13) have an opposing axial direction of inclination to the strength members (25) of the other working ply (15),
wherein the belt ply (14) which is arranged between these two working plies (13, 15) is a belt ply (14) which is embodied as a zero-degree ply with parallel strength members (24) which are embedded in rubber and which enclose in their orientation an angle β where 0°≤β≤5° with respect to the circumferential direction U,
wherein both working plies (13, 15) are made wider than the belt ply (14) which is embodied as the zero-degree ply, and are coupled in contact with one another in the axial direction A of the pneumatic vehicle tire on both sides outside the belt ply (14), embodied as a zero-degree ply, along an extension section of the length p where p > 0 mm in which the distance s, measured in the radial direction R, of the strength members (23) of the one working ply (13) with respect to the strength members (25) of the other working ply (15) is embodied with s ≤ 1.5 mm,
**characterized in that**, at 10% of the breaking strength, the strength members (23, 25) of one, in particular both, of the two working plies (13, 15) respectively have an extension D of 0.22% ≤ D ≤ 0.4%.

2. Pneumatic vehicle tire according to the features of Claim 1,
wherein the extension length p of the coupling is embodied with 5 mm ≤ p ≤15 mm.

3. Pneumatic vehicle tire according to the features of Claim 1 or 2,
wherein both working plies (13, 15) extend over an extension section of the length t where 5 mm ≤ t ≤ 10 mm starting from the extension section of the length p of the coupling in an axial direction pointing away from the belt ply (14), without contact with one another, and one (15) of the two working plies ends there, wherein in the extension section of the length t the distance s₁, measured in the radial direction R, of the strength members (23) of the one working ply (13) with respect to the strength members (25) of the other working ply is embodied with s₁ > 1.5 mm, in particular with s₁ < 5 mm, in particular with a continuous increase along the extent up to the edge of the one working ply (13).

4. Pneumatic vehicle tire according to the features of one of the preceding claims,
wherein the strength members (23, 25) of at least one of the two working plies (13, 15), in particular of both working plies (13, 15), each have a breaking strength F where F > 1800N, in particular where F > 2500N.

5. Pneumatic vehicle tire according to the features of one of the preceding claims,
wherein the strength members (23, 25) of at least one of the two working plies (13, 15), in particular of both working plies (13, 15), each have an extension D of 0.28% ≤ D ≤ 0.32% at 10% of the breaking strength.

6. Pneumatic vehicle tire according to the features of one of the preceding claims,
wherein a further belt ply (16) having parallel strength members (26) embedded in rubber is formed radially outside the radially outer working ply (15) on the outer working ply (15).

7. Pneumatic vehicle tire according to the features of Claim 6, wherein the further belt ply (16) is embodied as a zero-degree ply whose strength members (26) enclose in their orientation an angle δ with respect to the circumferential direction U of the pneumatic vehicle tire where 0°≤δ≤5°.

8. Pneumatic vehicle tire according to the features of Claim 6, wherein the strength members (26) of the further belt ply (16) enclose in their orientation an angle δ with respect to the circumferential direction U of the pneumatic vehicle tire where 10°<δ≤90°, in particular where 15°≤δ≤45°.

9. Pneumatic vehicle tire according to the features of one of the preceding claims,
wherein an additional belt ply (17) having parallel strength members (27) embedded in rubber is formed radially inside the radially inner working ply (13) between the carcass (5) and the radially inner working ply (13), the strength members (27) of which further belt ply (17) enclose in their orientation an angle ε with respect to the circumferential direction U of the pneumatic vehicle tire, in particular where 45°≤ε≤90°.

10. Pneumatic vehicle tire according to the features of one of the preceding claims,
wherein the radially outer of the two working plies (15) is made smaller in its axial extent c in the pneumatic vehicle tire than the radially inner of the two working plies (13), wherein, in particular, the radially outer (15) of the two working plies (13, 15) ends on both axial sides within the axial extent region of the radially inner (13) of the two working plies (13, 15) .

11. Pneumatic vehicle tire according to the features of one or more of the preceding claims,
wherein the strength members (24, 26) of the zero-degree ply/plies (14, 16) are strength members made of steel.

12. Pneumatic vehicle tire according to the features of one or more of the preceding claims,
wherein the strength members (24) are at least the zero-degree ply (14) high-elongation cord (HE) arranged between the two working plies (13, 15).

13. Pneumatic vehicle tire according to the features of one of Claims 6 to 9, wherein the strength members (26, 27) of the additional belt ply (16, 17) are strength members made of steel.

## Revendications

1. Pneumatique de véhicule - en particulier pour véhicules utilitaires - comprenant une carcasse (5), avec une ceinture (9) construite radialement à l'extérieur de la carcasse (5) et avec une bande de roulement profilée (10) construite radialement à l'extérieur de la ceinture (9) sur la ceinture (9), la ceinture (9) se composant d'au moins trois couches de ceinture (13, 14, 15) disposées radialement de l'intérieur vers l'extérieur les unes sur les autres, la couche de ceinture radialement intérieure (13) et la couche de ceinture radialement extérieure (15) étant des couches de travail en acier avec des renforts parallèles noyés dans du caoutchouc (23, 25), les renforts (23) de la couche de travail radialement intérieure (13) formant dans leur orientation un angle α par rapport à la direction périphérique U tel que 10° ≤ α ≤ 45° et les renforts (25) de la couche de travail radialement extérieure (15) formant un angle γ par rapport à la direction périphérique U tel que 10° ≤ γ ≤ 45°, les renforts (23) de l'une des couches de travail (13), vu dans la direction périphérique U du pneumatique de véhicule, présentant une direction d'inclinaison axiale opposée à celle des renforts (25) de l'autre couche de travail (15),
la couche de ceinture (14) disposée entre ces deux couches de travail (13, 15) étant une couche de ceinture (14) réalisée en tant que couche de zéro degré avec des renforts parallèles noyés dans du caoutchouc (24) qui forment dans leur orientation un angle β tel que 0° ≤ β ≤ 5° dans la direction périphérique U,
les deux couches de travail (13, 15) étant plus larges que la couche de ceinture (14) réalisée sous forme de couche de zéro degré et étant accouplées en contact l'une avec l'autre dans la direction axiale A du pneumatique de véhicule des deux côtés à l'extérieur de la couche de ceinture (14) réalisée sous forme de couche de zéro degré le long d'une portion d'étendue de longueur p avec p > 0 mm, dans laquelle la distance s des renforts (23) de l'une des couches de travail (13) aux renforts (25) de l'autre couche de travail (15), mesurée dans la direction radiale R, vaut s ≤ 1,5 mm,
**caractérisé en ce que**
les renforts (23, 25) de l'une, en particulier de deux, des deux couches de travail (13, 15) présentent à chaque fois un allongement D de 0,22 % ≤ D ≤ 0,4 %, à 10 % de la force de rupture.

2. Pneumatique de véhicule selon les caractéristiques de la revendication 1,
dans lequel la longueur d'étendue p de l'accouplement est réalisé de telle sorte que l'on ait 5 mm ≤ p ≤ 15 mm.

3. Pneumatique de véhicule selon les caractéristiques de la revendication 1 ou 2,
dans lequel les deux couches de travail (13, 15) s'étendent à partir de la portion d'étendue de longueur p de l'accouplement dans la direction axiale s'écartant de la couche de ceinture (14) sans contact l'une avec l'autre sur une portion d'étendue de longueur t telle que 5 mm ≤ t ≤ 10 mm, et l'une (15) des deux couches de travail se termine à cet endroit, dans la portion d'étendue de longueur t , la distance s₁ des renforts (23) de l'une des couches de travail (13) aux renforts (25) de l'autre couche de travail, mesurée dans la direction radiale R, notamment avec une augmentation constante le long de l'étendue jusqu'au bord de l'une des couches de travail (13), est réalisée de telle sorte que l'on ait s₁ > 1,5 mm, en particulier s₁ < 5 mm.

4. Pneumatique de véhicule selon les caractéristiques de l'une quelconque des revendications précédentes,
dans lequel les renforts (23, 25) d'au moins l'une des deux, en particulier des deux couches de travail (13, 15) présentent à chaque fois une force de rupture F > 1800 N, en particulier F > 2500 N.

5. Pneumatique de véhicule selon les caractéristiques de l'une quelconque des revendications précédentes,
dans lequel les renforts (23, 25) d'au moins l'une des deux, en particulier des deux couches de travail (13, 15) présentent à chaque fois un allongement D de 0,28 % ≤ D ≤ 0,32 % à 10 % de la force de rupture.

6. Pneumatique de véhicule selon les caractéristiques de l'une quelconque des revendications précédentes,
dans lequel une couche de ceinture supplémentaire (16) est réalisée sur la couche de travail extérieure (15) avec des renforts parallèles noyés dans du caoutchouc (26) radialement à l'extérieur de la couche de travail radialement extérieure (15).

7. Pneumatique de véhicule selon les caractéristiques de la revendication 6,
dans lequel la couche de ceinture supplémentaire (16) est réalisée sous forme de couche de zéro degré dont les renforts (26) forment dans leur orientation un angle 5 par rapport à la direction périphérique U du pneumatique de véhicule tel que 0° ≤ δ ≤ 5°.

8. Pneumatique de véhicule selon les caractéristiques de la revendication 6,
dans lequel les renforts (26) de la couche de ceinture supplémentaire (16) forment dans leur orientation un angle 5 par rapport à la direction périphérique U du pneumatique de véhicule tel que 10° ≤ δ ≤ 90°, en particulier tel que 15° ≤ δ ≤ 45°.

9. Pneumatique de véhicule selon les caractéristiques de l'une quelconque des revendications précédentes,
dans lequel une couche de ceinture supplémentaire (17) avec des renforts parallèles noyés dans du caoutchouc (27) est réalisée radialement à l'intérieur de la couche de travail radialement intérieure (13) entre la carcasse (5) et la couche de travail radialement intérieure (13), dont les renforts (27) forment dans leur orientation un angle ε par rapport à la direction périphérique U du pneumatique de véhicule, en particulier tel que 45° ≤ ε ≤ 90°.

10. Pneumatique de véhicule selon les caractéristiques de l'une quelconque des revendications précédentes,
dans lequel la couche de travail radialement extérieure (15) des deux couches de travail est réalisée dans son étendue axiale c dans le pneumatique de véhicule avec une taille inférieure à celle de la couche de travail radialement intérieure (13) des deux couches de travail,
dans lequel notamment la couche de travail radialement extérieure (15) des deux couches de travail (13, 15) se termine vers les deux côtés axiaux à l'intérieur de la région d'étendue axiale de la couche de travail radialement intérieure (13) des deux couches de travail (13, 15).

11. Pneumatique de véhicule selon les caractéristiques de l'une ou plusieurs des revendications précédentes,
dans lequel les renforts (24, 26) de la ou des couches de zéro degré (14, 16) sont des renforts en acier.

12. Pneumatique de véhicule selon les caractéristiques de l'une ou plusieurs des revendications précédentes,
dans lequel les renforts (24) d'au moins la couche de zéro degré (14) disposée entre les couches de travail (13, 15) sont des câblés à allongement élevé (HE).

13. Pneumatique de véhicule selon les caractéristiques de l'une quelconque des revendications 6 à 9,
dans lequel les renforts (26, 27) de la couche de ceinture supplémentaire (16, 17) sont des renforts en acier.
